# EUROPEAN PATENT APPLICATION

(11) **EP 1 286 042 A1**
(43) Date of publication of application: **26.02.2003**
(21) Application number: 01906328.8
(22) Date of filing: 26.02.2001
(51) Int. Cl.: F02M 37/22

(54) **FUEL FEED DEVICE FOR ENGINE**

(30) Priority: 09.03.2000 JP 2000065387
(71) Applicant: Mitsuba Corporation, Kiryu-shi, Gunma 376-8555 (JP)
(72) Inventor: NARUSHIMA, Masahiko, Seta-gun, Gunma 376-0121 (JP); MORI, Shinya, Ohta-shi, Gunma 373-0817 (JP)
(74) Representative: Hud, Robert
(86) International application number: JP0101438
(87) International publication number: WO01066931

(57) **Abstract**

The invention makes a fuel feeder device for an engine compact, wherein the fuel feeder device for an engine is provided with the first filter 13 to filtrate sucked fuel, and the second filter to filtrate discharge fuel, at the bracket 2 of the casing 1 in which a pump means and a motor means are internally incorporated.

## Description

### FIELD OF THE INVENTION

The present invention relates to a fuel feeder device that feeds fuel to an engine.

### TECHNICAL BACKGROUND

Generally, this type of fuel feeder device is structured so that a pump means to feed fuel in an fuel tank to an engine, and a motor means, which is a drive source of the pump means, are internally incorporated in the casing. It is necessary that, in such a fuel feeder device, filtration is required so that foreign substances in a fuel tank are not permitted to enter the pump means. It is further necessary that, when discharging the corresponding sucked fuel to the engine side, foreign substances in the pump are not discharged to the engine side. Therefore, conventionally, there has been a type of fuel feeder device, in which filters (strainers) are outwardly fitted to the fuel intake port and discharge port of the fuel pump via piping.

Therefore, the fuel feeder device has a problem in that, since the filter is fitted to the outside of the device, it is large-scaled, additional piping is required, which accordingly increases the number of components, and the structure thereof becomes complicated. This is a problem to be solved by the invention. Further, since it becomes actually impossible to replace a filter when it is clogged in the case where a fuel feeder device is internally incorporated in a fuel tank, the filter area is required to be made as large as possible to prevent the filter from being clogged. Therefore, the filter is made accordingly large, whereby the fuel feeder device may be obliged to become larger in size. This is also a problem to be solved by the invention.

### DISCLOSURE OF THE INVENTION

The present invention was developed to solve the above-described problems and shortcomings in view of the above-described situations. It is therefore an object of the invention to provide a fuel feeder device for an engine, internally including a pump means to feed fuel to an engine and a motor means being a drive source of said pump means in its casing, wherein an intake flow passage for taking in fuel from a fuel tank, a first filter for filtrating said taken fuel, a discharge flow passage for discharging said taken fuel to the engine side, and a second filter for filtrating said discharged fuel are provided in a bracket formed to clog one end opening of said casing. In such a structure as described above, it is possible to evade external fitting of the first and second filters via piping, wherein the structure can be simplified and is made compact.

Such a structure is featured in that the bracket is a flange, which is fixed at the fuel tank.

Such a structure is featured in that the first filter is secured at the outer circumference of the bracket, and the second filter is internally incorporated in the bracket, thereby a space for arranging the first and second filters may be separated, wherein the filter area can be increased.

Further, in the structure, the filter attached to the outer circumference of the bracket is featured in that it is incorporated so as to surround the outer circumference of the bracket and is made cylindrical. Such a structure can widen the filter area by utilizing the outer circumferential surface of the bracket.

In addition, the structure is featured in that a hollow filter chamber having a large diameter in the diametrical direction is formed at the bracket, and the filter internally incorporated in the bracket is made like a flat plate that is incorporated so as to shield the filter chamber in the axial direction, whereby the area of the filter internally incorporated in the bracket can be widened by utilizing the diameter of the bracket.

Still further, the structure is featured in that the bracket is formed by molds so that the filter chamber for the filter internally incorporated in the corresponding bracket is formed of split faces, whereby the mold process of the bracket can be carried out while internally incorporating the filter.

Still further, the construction is featured in that the filter secured at the outer circumference of the bracket is fitted to and inserted into the inlet port of the suction flow passage formed at the bracket in the diametrical direction, whereby the first filter does not protrude from the outer circumference of the bracket.

The above-described and other objects, features and advantages of the present invention will become more apparent by reference to the following description of preferred embodiments of the invention taken in conjunction with the accompanying drawings.

### BRIEF DESCRIPTION OF THE DRAWINGS

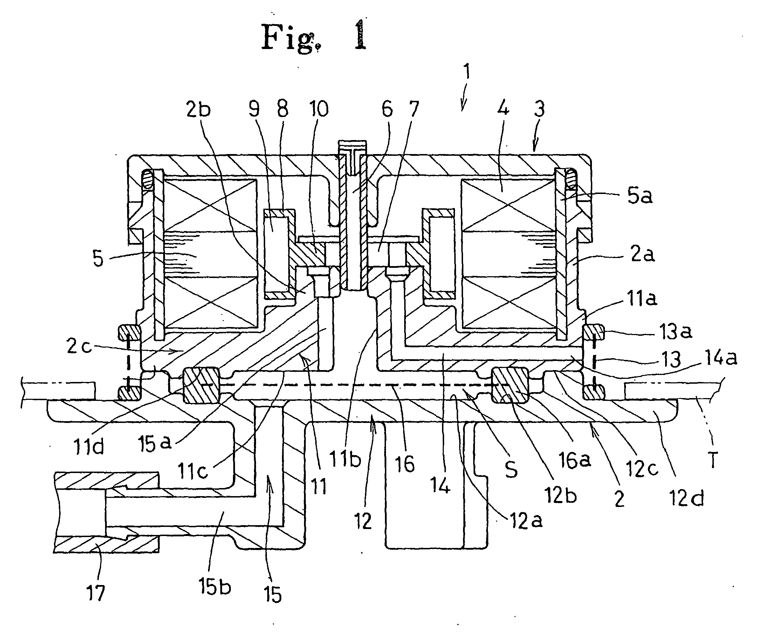

Fig.1 is a sectional view of a fuel feeder device;

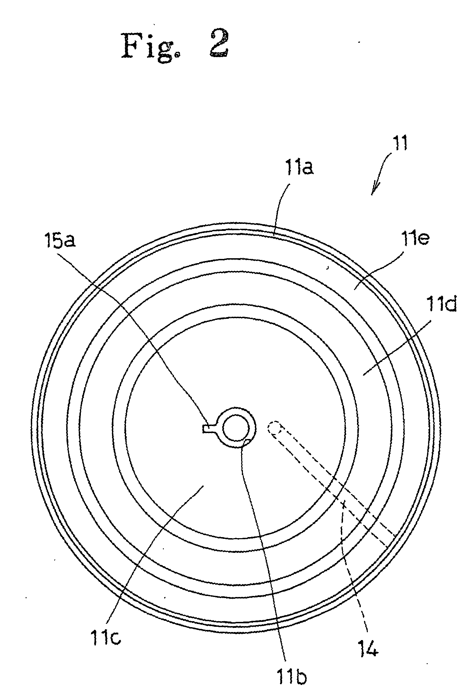

Fig. 2 is a bottom view of the first split member;

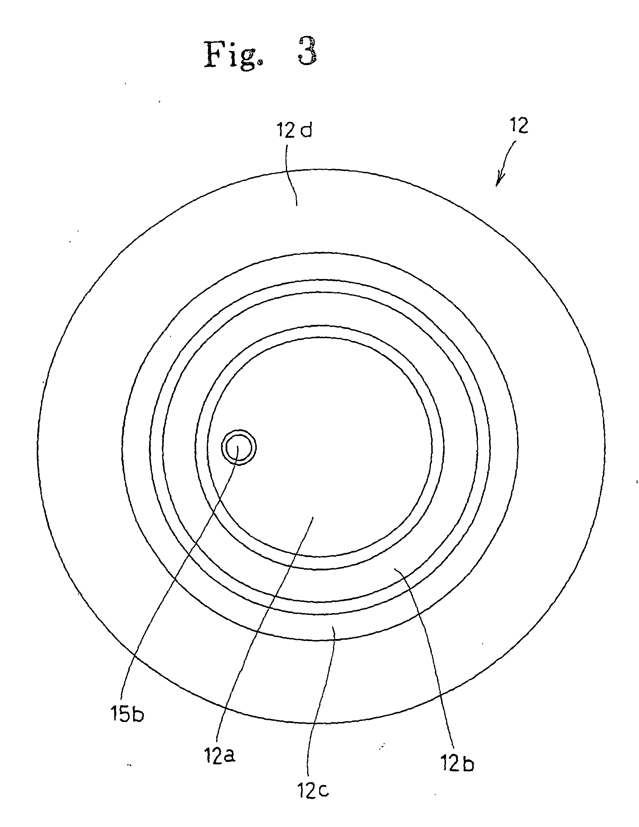

Fig. 3 is a plan view of the second split member;
Fig. 4 is a sectional view showing a fuel feeder device according to the second embodiment;
Fig. 5 is a sectional view showing a fuel feeder device according to the third embodiment;
Fig. 6 is a plan view of the first split member of the third embodiment;
Fig. 7 is a sectional view showing a fuel feeder device according to the fourth embodiment;
Fig. 8 is a sectional view showing a fuel feeder device according to the fifth embodiment;
Fig. 9 is a cross-sectional view showing a fuel feeder device according to the fifth embodiment; and
Fig. 10 is an enlarged sectional view of the major parts of the pump body according to the fifth embodiment.

### BEST MODE FOR CARRYING OUT THE INVENTION

Next, a description is given of embodiments of the invention with reference to the accompanying drawings. In the drawings, 1 denotes a casing of a fuel feeder device that is internally incorporated in a fuel tank T. The casing 1 is constructed of the first cylindrical bracket 2 (corresponding to the bracket according to the invention) having the bottom, one end of which is open, and the second bracket 3 that closes the open end of the first bracket 2. Either of these brackets 2 and 3 is made of a resin material. A stator 5 on which an excitation coil 4 is wound, constituting a motor means, is internally fitted to the cylindrical portion 2a of the first bracket 2. In addition, a yoke 5a is disposed on the outer circumference in a state where it is internally fitted to the cylindrical portion 2a. 6 denotes a hollow shaft, the respective ends of which are set and fixed at the first and second brackets 2 and 3.A driven side pump portion 7 that constitutes a pump means is integrally set and fixed at the hollow shaft 6. A rotor core 8 is pivotally supported so as to be rotatable at the bearing part 2b of the first bracket 2 in order to constitute the motor means, and the rotor core 8 has a permanent magnet 9 fixed at the outer circumference thereof so as to face the inner circumference of the above-described stator 5 with a space secured therebetween, and has a drive side pump portion 10 integrally fixed at the inner circumference thereof. And, in an embodiment of the invention, since the rotor core 8 rotates in line with excitation control of the stator 5, the drive side pump portion 10 also rotates, and fuel is sucked in and discharged in line therewith as described below.

In the embodiment, the invention is embodied in the cylindrical bottom portion 2c of the first bracket 2. That is, the cylindrical bottom portion 2c of the first bracket 2 is formed of the first split member 11 having the cylindrical portion 2a integrally formed thereon and the second split member 12 integrated with the outer bottom surface of the first split member 11 by being brought face to face with the outer bottom surface. An engagement protrusion 11 a to fix the circumferential frame 13a of the first filter 13, described later, is formed on the circumferential surface of the first split member 11 so as to become a circumferential rib, and a suction port 14a of the suction flow passage 14 is formed on the circumferential surface at the bottom side from the engagement protrusion 11a. The suction flow passage 14 that is formed from the inlet port 14a to the center side in the diametrical direction is formed to be folded in the axial direction so as to face the above-described pump means side. In addition, the above-described bearing part 2b is formed at the middle part of the first split member 11, and the center side thereof from the bearing part 2b is made into a hollow cylindrical portion 11b and supports the corresponding side part of the above-described hollow shaft 6. 15 denotes a fuel discharge flow passage from the pump means, and the front half portion 15a thereof is formed so as to face the first split member 11 in the axial direction. The front half portion of the discharge flow passage 15a is united with the hollow cylindrical portion 11 b on the way. Further, a recessed groove 11c having a large diameter is formed on the outer bottom surface of the first split member 11 in a state where it communicates with the front half portion 15a of the discharge flow passage. In addition, a supporting groove 11d to fit and support the circumferential frame 16a of the second filter 16, described later, is formed on the outer circumference of the first split member 11, wherein the surface 11e deposited with the above-described second split member 12 is formed so as to sink on the outer circumference thereof.

On the other hand, a recessed groove 12a, having a large diameter, opposing the above-described groove 11c is formed on the butting surface between the second split member 12 and the first split member 11, a supporting groove 12b facing the supporting groove 11d is formed on the outer circumference thereof, and a deposited surface 12c opposing the deposited surface 11e is also formed on the outer circumference. Further, a flange portion 12d having a larger diameter than the outer diameter of the first bracket 2 is formed on the outer circumference, and is made into a mounting piece by which the flange 12d is attached to the fuel tank. Further, the rear half portion 15b of the discharge flow passage is formed so as to protrude in the axial direction in the recessed groove 12a of the second split member 12, and a discharge outlet 15b to connect piping 17 at the engine (not illustrated) is formed at the tip end thereof.

The above-described first filter 13 is formed so that the filter body thereof is made cylindrical so as to surround the outer circumference of the first bracket 2 with a space secured therebetween, and a circumferential frame 13a is provided at both the ends of the cylinder. On the other hand, the second filter 16 is formed so that the filter body thereof is made disk-shaped so as to correspond to the above-described recessed grooves 11c and 12a and a circumferential frame 16a is provided and formed at the edge thereof. The first bracket 2 is set to be structured as follows. Namely, the outer circumferential frame 13a of the first filter is engaged and retained between the engagement protrusion 11a and the flange portion 12d so as to surround the outer circumference of the bracket. In addition, the circumferential frame 16a of the second filter 16a is butted in a state where it is fitted in the supporting grooves 11d and 12b, wherein the depositing surfaces 11e and 12c brought face to face with each other are deposited to each other for connection.

With the structure described above, not only the suction flow passage 14 and discharge flow passage 15 of fuel but also the first filter 13 and second filter 16, which filtrate sucked fuel and discharged fuel, are provided on the cylindrical bottom 2c of the first bracket 2 that constitutes the casing 1 of the fuel feeder device. Therefore, routing of piping is no longer required as in a conventional type in which these components are outwardly fitted, wherein the structure is simplified and is made compact.

Furthermore, in this case, since the first filter 13 is provided on the outer circumferential surface of the first bracket 2, and the second filter 16 is internally incorporated in the cylindrical bottom portion 2c of the first bracket 2, the place of arrangement of these filters 13 and 16 can be separated from each other, wherein an increase in the filter area can be achieved. In addition, the first filter 13 is cylindrical so as to surround the outer circumference of the bracket, and the second filter 16 is made like a plate which can shield, in the axial direction, the filter chamber S formed by butting the recess grooves 11c and 12a having a large diameter in the diametrical direction of the bracket to each other, and the filtering area can be widened in either of the filters 13 and 16, whereby, although the filters 13 and 16 are provided at the first bracket, they can be used for a long time.

Also, since the first bracket 2 is formed of the first and second split members 11 and 12 in which a filter chamber S is of split surfaces while the filter S that internally incorporates the second filter 16 is formed on the cylindrical bottom portion 2c of the first bracket, it is possible to form these split members 11 and 12 by molds although the filter chamber S internally incorporates the second filter 16, which enables the process work thereof to be facilitated.

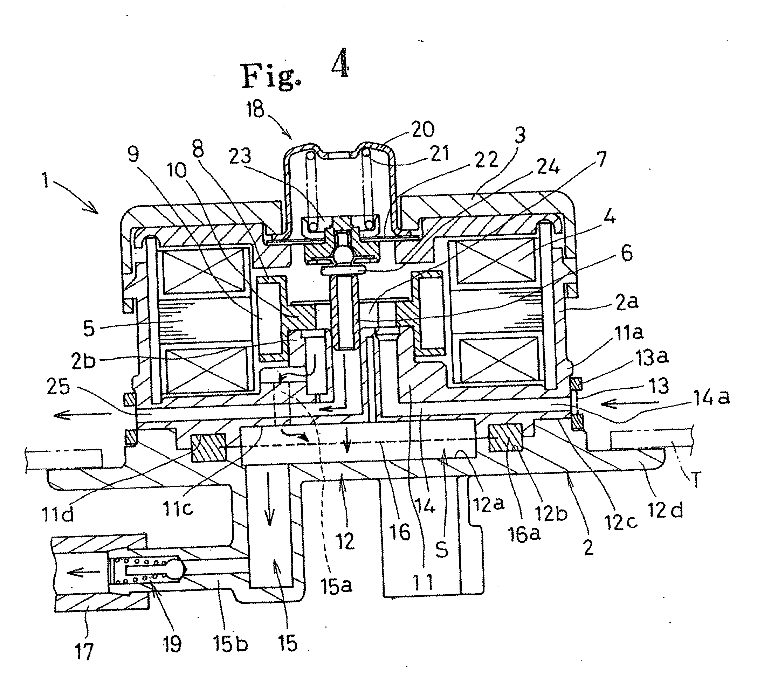

Also, the invention is not limited to the above-described embodiment. For example, the invention may be structured as in the second embodiment shown in Fig. 4. In the second embodiment, basically, the same reference numbers identify the same members as those in the first embodiment. The second embodiment is provided with a pressure regulating means (pressure regulator) 18 and a check valve 19. That is, the pressure regulating means 18 regulates and maintain the fuel feeding pressure to the engine side at a predetermined pressure level. The pressure regulating means comprises of the third bracket 20 having a cylindrical bottom, which is set and fixed at the second bracket 3, a resilient means 21, one end of which is supported on the bottom surface of the third bracket 20, a diaphragm 22 supported at the second bracket 3 and the third bracket 20, a holder 23 secured at the middle part of the diaphragm 22 and resiliently pressed to the resilient means 21, and a valve 24 set and fixed at the holder 23, which seals one end of the hollow shaft 6 so as to be opened and closed. Where the fuel pressure in the casing 1 exceeds a predetermined level of pressure, the diaphragm 22 moves to the bottom surface side of the third bracket 20 against the urging force of the resilient means 21, wherein the end portion of the hollow shaft 6 is opened to cause the fuel in the casing 1 to escape into the fuel tank, thereby regulating the fuel pressure to the engine side. In this connection, it is needless to say that the discharge flow passage 25 from the hollow shaft 6 to the fuel tank is not united with the respective flow passages described in connection with the first embodiment.

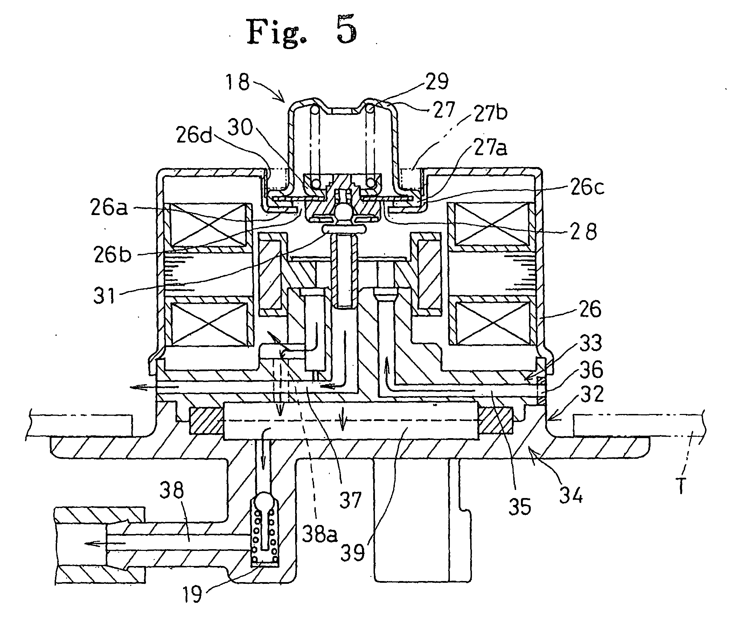

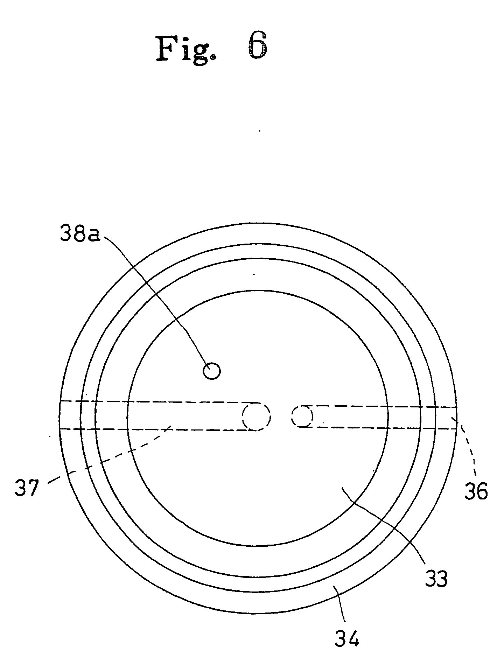

And, in this type of structure, since a suction flow passage 14, a discharge flow passage 25 and the front half part 15a of the discharge flow passage are formed at the first split member 11, the functions can be collected, wherein the number of components can be decreased, and the structure can be simplified. Still further, the invention may be embodied in the third embodiment shown in Fig. 5 and Fig. 6. That is, although the third embodiment is provided with a pressure regulating means (pressure regulator )18 and a check valve 19 as in the second embodiment, the third embodiment is such that the cylindrical portion 2a is removed from the bracket 2, and the yoke 26 is exposed to the outside to be made into a part of the casing 1. That is, in this type of structure, the yoke 26 is made cylindrical and has a bottom, wherein a recess 26c in which a throughhole portion 26b is provided at the middle part thereof is formed on the cylindrical bottom portion 26a. An internally threaded portion 26d is prepared on the inner circumferential portion of the recess portion 26c. On the other hand, 27 denotes a regulator casing (corresponding to the third bracket according to the above-described second embodiment) that has a bottom and is formed to be cylindrical. A fold-over piece 27 that is folded over to be C-shaped is formed at the outer circumferential side at the open end portion of the regulator casing 27, wherein the third embodiment comprises of the regulator casing 27, a diaphragm 28 placed between the fold-over pieces 27a of the regulator casing 27, a resilient member 29, one end of which is supported on the bottom surface of the regulator casing 27, a holder resiliently pressed to the other end of the resilient member 29 secured at the central portion of the diaphragm 28, and a valve body 31 set and fixed at the holder 30 in a state of penetrating the above-described throughhole 26b, which seals one end of the hollow shaft 6 so as to open and close the end portion. And, where the fuel pressure exceeds a predetermined pressure level, the diaphragm 28 moves to the bottom side of the regulator casing 27 against the urging force of the resilient member 29, whereby the end portion of the hollow shaft 6 is opened to cause the fuel in the casing 1 to escape into the fuel tank in order to adjust the fuel pressure supplied to the engine side. Further, the regulator casing 27 is assembled by means of a bolt member 27b screwed in the above-described internally threaded portion in a state of outwardly fitting to the corresponding regulator casing 27.

This type of embodiment is provided with a bracket 32 that constitutes the casing 1 along with the yoke 26. The bracket 32 is composed of the first split member 33 set and fixed to close the open end of the yoke 26 and the second split member 34 integrated therewith by abutting the first split member 33 to the bottom surface. And, as in the second embodiment, a fuel suction flow passage 35 is formed on the first split member 33. However, the first filter 36 is attached at the inlet of the fuel suction flow passage 35 so that it sinks in the flow passage 35. Further, a discharge flow passage 37 that communicates with the hollow shaft 6 pressed by the above-described valve body 31 is formed at the first split member 33. On the other hand, the delivery flow passage 38 with a check valve 19 is provided at the second split member 34. The second filter 39 is provided at the abutting part of the first and second split members 33 and 34, and filtrates fuel discharged from pump portion, and the front half portion 38a of the delivery flow passage 38 that supplies fuel to the second filter 39 is provided at the first split member 33 so as to avoid the delivery flow passage 38.

In the third embodiment thus structured, since the suction flow passage 35, discharge flow passage 37 and the front half portion 38a of the delivery flow passage are formed at the first split member 33 as in the second embodiment, such an effect can be brought about, which can simplify the structure. Still further, in the third embodiment, the yoke 26 forms the casing 1, and the cylindrical portion 2a and bracket 3 are no longer required, which is different from the first and second embodiments, wherein the number of components can be further decreased, and the structure can be further simplified.

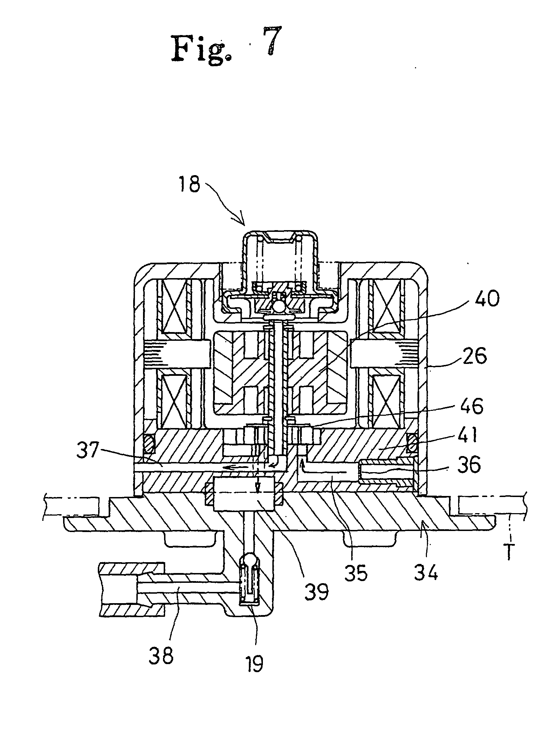

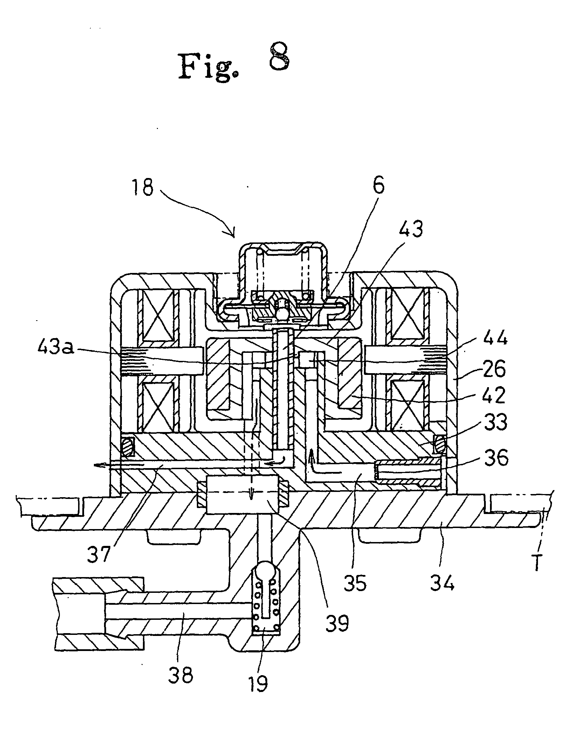

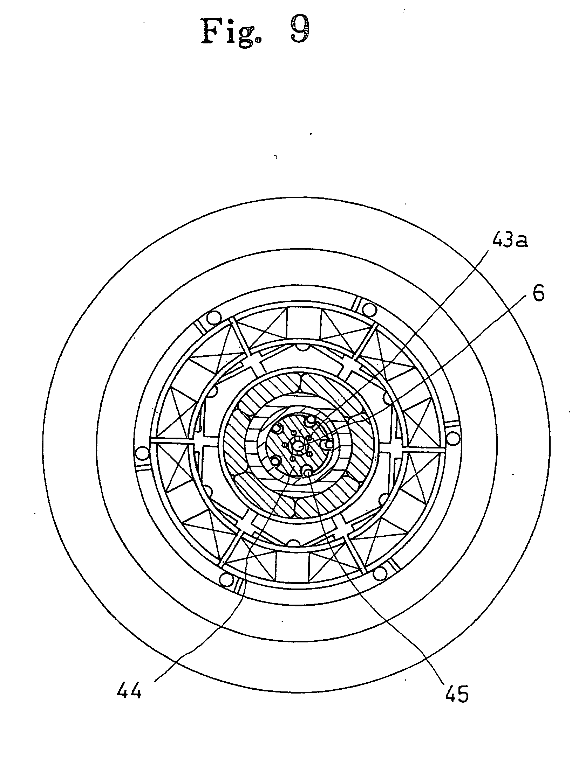

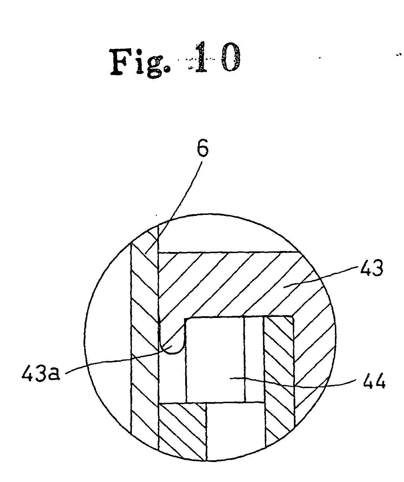

Still further, the invention can be embodied as in the fourth embodiment shown in Fig. 7. That is, although the respective embodiments described above are such that the pump body is disposed at the inner circumferential side of the rotor 8, the fourth embodiment is such that the pump body 46 is disposed with a position slip toward the bracket 41 side in the axial center direction with respect to the rotor core 40, wherein although the fuel pump can be made longer in the axial direction, the pump can be made slender in the diametrical direction.
Still further, the fifth embodiment shown in Fig. 8, Fig. 9 and Fig. 10 employs a vane-type pump as a pump body. In this case, the rotor 43 to which a permanent magnet 42 is attached has a bottom and is formed to be cylindrical, wherein a rib-like protrusion 43a is formed at the inner-diametrical portion through which a hollow shaft 6 of the cylindrical bottom portion penetrates, and the inner circumferential portion of the vane pump 44 is incorporated at the rib-like protrusion 43a. Thereby, the rotor 43 becomes a pump base of the vane pump, wherein concurrent use of structural members can be achieved to cause the number of components to be decreased, and the structure can be simplified. In this connection, 45 denotes a vane.

Further, the modes of the fourth and fifth embodiments are not described in the specification, wherein the reference numbers shown in the drawings are the same as the reference numbers described in relation to the mode of the third embodiment.

Lastly, in the embodiments of the invention the pump portion is applied not only to volumetric-type pump but also to non-volumetric-type pump.

### INDUSTRIAL APPLICABILITY

The present invention is characterized in that a fuel feeder device for an engine, internally including a pump means to feed fuel to an engine and a motor means being a drive source of said pump means in its casing, wherein an intake flow passage for taking in fuel from a fuel tank, a first filter for filtrating said taken fuel, a discharge flow passage for discharging said taken fuel to the engine side, and a second filter for filtrating said discharged fuel are provided in a bracket formed to clog one end opening of said casing, thereby avoiding the structure that filters (strainers) are outwardly fitted via piping and realizing a simplified structure and downsizing.

## Claims

1. A fuel feeder device for an engine, internally including a pump means to feed fuel to an engine and a motor means being a drive source of said pump means in its casing, wherein an intake flow passage for taking in fuel from a fuel tank, a first filter for filtrating said taken fuel, a discharge flow passage for discharging said taken fuel to the engine side, and a second filter for filtrating said discharged fuel are provided in a bracket formed to clog one end opening of said casing.

2. The fuel feeder device as set forth in Claim 1, wherein said bracket is a flange that is fixed on a fuel tank.

3. The fuel feeder device as set forth in Claim 1 or 2, wherein said first filter is attached on the outer circumference of the bracket, and the second filter is internally incorporated in said bracket.

4. The fuel feeder device as set forth in Claim 3, wherein said filter attached to the outer circumference of said bracket is formed to be cylindrical to be incorporated to surround the outer circumference of said bracket.

5. The fuel feeder device as set forth in Claim 3 or 4, wherein a hollow filter chamber having a large diameter in the diametrical direction is formed in the bracket, and said filter internally incorporated in the bracket is made like a flat plate that is incorporated to shield said filter chamber in the axial direction.

6. The fuel feeder device as set forth in Claim 3, 4 or 5, wherein said bracket is formed by molds so that the filter chamber for the filter internally incorporated in the bracket constitutes a split surface.

7. The fuel feeder device as set forth in Claim 3, wherein the filter attached to the outer circumference of the bracket is fitted to and inserted into an inlet port of the suction flow passage formed in the diametrical direction of the bracket.
